(19) Europäisches Patentamt / European Patent Office / Office européen des brevets

(11) **EP 3 335 871 B1**

(12) **EUROPEAN PATENT SPECIFICATION**

(45) Date of publication and mention
of the grant of the patent:
**16.09.2020 Bulletin 2020/38**

(21) Application number: **17208509.4**

(22) Date of filing: **19.12.2017**

(51) Int Cl.:
*B32B 5/02* (2006.01)    *B32B 5/08* (2006.01)
*B32B 5/18* (2006.01)    *B32B 5/24* (2006.01)
*B32B 5/26* (2006.01)    *B32B 23/04* (2006.01)
*B32B 23/10* (2006.01)    *B32B 27/06* (2006.01)
*B32B 27/12* (2006.01)    *B32B 27/32* (2006.01)
*B32B 37/06* (2006.01)    *B32B 37/10* (2006.01)

(54) **A MULTILAYER STRUCTURE AND AUTOMOTIVE COMPONENT MADE THEREOF**

MEHRSCHICHTSTRUKTUR UND DARAUS HERGESTELLTE KRAFTFAHRZEUGKOMPONENTE

STRUCTURE MULTICOUCHE ET COMPOSANT AUTOMOBILE FABRIQUÉ À PARTIR DE CELLE-CI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.12.2016 IT 201600128166**

(43) Date of publication of application:
**20.06.2018 Bulletin 2018/25**

(73) Proprietor: **Adler Evo S.r.l.
10060 Virle Piemonte (IT)**

(72) Inventors:
• **LESAGE, Giorgio
10128 TORINO (IT)**
• **TOCCHI, Gabriele
20900 MONZA (IT)**
• **ROSSI, Samuele
20832 DESIO (IT)**
• **TARELLO, Maurizio
10014 CALUSO (IT)**

(74) Representative: **Cattaneo, Elisabetta et al
Notarbartolo & Gervasi S.p.A.
Viale Achille Papa, 30
20149 Milano (IT)**

(56) References cited:
**EP-A1- 2 251 858    EP-A1- 2 364 881
WO-A1-98/21260    WO-A1-2016/166217**

**Description**

**FIELD OF THE INVENTION**

The present invention relates to a multilayer structure that can achieve desired sound absorption and structural-stiffness performances. This novel multilayer structure is suitable for several automotive components, placed in different vehicle locations, such as: engine compartment area and at engine sides, or underneath, having in all cases thermal functions. The multilayer structure of the invention reduces weight of vehicle itself while being structural and self supporting, reduces noise levels and increases thermal comfort for passengers.

**STATE OF THE ART**

Today automotive industry requires panels/components placed in different vehicle locations, irrespectively whether they are trucks or passengers cars for thermal and acoustic needs.

In order to dampen the engine noise and insulate heat in the engine compartment, the so called "shields" are provided. These shields are placed at engine sides and made by inorganic compounds bound with thermosetting resins, usually combined with layers of different area weight of organic material with glass fibers/fillers (SMC) or even rubber (filled with inorganic materials). Alternatively, engine "bonnets" are provided. They are manufactured with inorganic compounds combined with natural fibers, added with thermosetting polymers; sometimes polyurethan foams are applied for the same function. All these materials are embedded within layers of specific polymers, treated for oil/fluids/fire resistance, sometimes coupled with Al foils when exposure to high temperature sources is present.

For the passenger compartment the current panels have mainly a sound absorption and insulation function, together with a requirement for thermal insulation so as not to diffuse outside the energy spent in order to heat/cool the cabin. To this aim, the materials employed for the structural layer are usually natural fibers, sometimes bound with thermosetting powders or with thermoplastic fibers. Such structural layers are usually covered by an aesthetic/functional surface material (which can be fibers or a compact layer); at its opposite side a glued (in separate process step) layer made by synthetic fibers is usually present, being this glued layer mainly addressed to thermal insulation.

Nowadays noise shielding components within engine area are hence used for thermal and acoustic purposes mainly, but they have limited integration capability. As a matter of fact, they are often mechanically fixed, with reduced structural properties, and they have usually very high weights. A typical value of the present shielding components is between 3.0 and 4.0 kg/m$^2$ and the part itself is usually screwed or fixed through specific brackets/clips.

The known technology for these kinds of automotive components meets acoustical and thermal performances, but in order to satisfy these performances such components resulted to be very heavy.

Furthermore internal cab trims are today produced via multi-steps processes, needed to combine layers sourced and molded from different suppliers. The internal cab trims are mainly used for aesthetic and gap filling purposes, being the thermal performances made by different and additional layers, usually not moldable, but "ex post" glued to so called "carrier", i.e. the main panel. Today acoustic performances are limited by the need of ensuring structural and stiffness properties, which force to sacrifice acoustic absorption in the panel per se as above explained. A decrease in thickness, necessary to ensure bending stiffness, dramatically reduces sound absorption.

WO 2016/166217 discloses an acoustic absorbing multilayer surface material, for covering a surface of an engine bay component.

EP 2 251 858 discloses a sound insulated, multi-layer material structure for automotive application.

It is still felt the need for a compromise between these requirements in automotive components.

Therefore an object of the present invention consists in providing automotive components having a balanced integration of functions, i.e. thermal, acoustical and mechanical functions, while at the same time having a lower weight as well as an higher design freedom for the different automotive compartments.

**SUMMARY OF THE INVENTION**

The inventors of the present invention have surprisingly found that a multilayer structure can achieve the desired sound absorption and structural-stiffness performances, while being lighter than the known structure used for the present automotive components .

Therefore the above objects have been achieved by a multilayer structure comprising:

- a layer α1;
- a porous fibrous layer α2 comprising:

   (i) a fibrous felt material selected from the group consisting of a fiber mixture composition of a synthetic fiber and a glass fiber, a fiber mixture composition of a synthetic fiber and a natural fiber; a natural fiber, being said fibrous felt material in amount of at most 70% by weight of the total weight of the porous fibrous layer; and

(ii) a phenolic thermosetting resin in amount of at most 30% by weight of the total weight of the porous fibrous layer;

- a porous-cellular layer $\beta$ comprising a semirigid, thermoformable polyurethane foam obtainable by a polyol polyether and diphenylmethane diisocyanate; and
- a layer $\gamma$,

wherein the elastic modulus E of said structure is proportional to the value of the following formula:

$$\frac{\sum_1^n SW^2}{(t_{max})^2 / \lambda} * \frac{\pi^3}{(\alpha_{500\,Hz} * \alpha_{1000\,Hz} * \alpha_{4000\,Hz})}$$

$$(1)$$

wherein

SW is the superficial weight (g/m$^2$) of each layer;
n is the number of layers in structure
$\alpha$ is the sound absorption coefficient, for normal angle wave incidence, at specified frequency according to UNI EN ISO 10534;
$t_{max}$ is the maximum final thickness of the structure and
$\lambda$ is the total thermal conductivity according to UNI EN ISO 8301, being the elastic modulus E measured according to UNI EN ISO 527.

In a preferred embodiment between the porous fibrous layer $\alpha 2$ and a porous-cellular layer $\beta$ a layer of low density polyethylene $\delta$ having a thickness in the range from 0.05 and 1 is present.

The inventor therefore found out the specific structure and materials which form it that allow to have the desired tensile Young modulus E.

Without being bound to any theory and as it will be apparent from the detailed description and from the examples, the features of the multilayer structure allow to have a very light article which also has optimal sound absorption properties together with a desired thermal and mechanical properties.

The present invention provides therefore an automotive component made of the multilayer structure of the invention.

The automotive component of the invention can be placed in different vehicles and in different locations of the vehicle, such as:

- engine compartment area, both above the engine, as sound absorber panel or on the engine sides, or underneath, as sound insulator panels
- cabin trim panels,

Such an automotive component in all cases has thermal functions, reduces the weight of vehicle itself, while being structural and self supporting, reduces noise levels, both from acoustic insulation and absorption, and increases thermal comfort, through heat insulation for passengers, thus improving the working and living environment for them.

It is evident that the multilayer structure and so the automotive component made thereof enable carmakers to significantly reduce weight of components and therefore of the final vehicle, thus reducing fuel consumption.

Furthermore, in view of the good thermal insulation and an optimal "gap/thickness filling", the multilayer structure and then the automotive component of the invention make possible to better use energy, usually used to heat the vehicle, both inside the passengers' (driver's) compartment and in the engine bay, where heat insulation and avoidance of heat losses at idle/switched off engine make it possible to reach/keep best exercise temperature and avoid fuel consumption or even incorrect combustion parameters.

The significant weight reduction of the multilayer structure enables even the improvement of working conditions, i.e. ergonomy and handling by operators at vehicle assembly plant. An automotive component made with standard known technology can weigh up to 14 kg, in comparison to the present automotive component which surprisingly shows a total weight of 6 kg as it will be evident in the experimental part..

**DESCRIPTION OF FIGURES**

Figure 1 shows a preferred multilayer structure as prepared in the example 1;
Figure 2(A) shows the form of a comparative truck engine bonnet;
Figure 2(B) shows the structure of the comparative truck engine bonnet;
Figure 3 shows a preferred multilayer structure of the of comparative truck engine bonnet of the invention as prepared in the example 2;
Figure 4 shows a comparative multilayer structure of an interior trim panel of the prior art.
Figure 5 shows a preferred multilayer structure an interior trim panel of the invention of example 3;
Figure 6 shows an acoustic comparison between invention and prior art of internal trim panels for trucks

**DETAILED DESCRIPTION OF THE INVENTION**

The present invention therefore relates to a multilayer structure comprising:

- a layer $\alpha 1$;
- a porous fibrous layer $\alpha 2$ comprising:

  (i) a fibrous felt material selected from the group consisting of a fiber mixture composition of a synthetic fiber and a glass fiber, a fiber mixture composition of a synthetic fiber and a natural fiber; a natural fiber, being said fibrous felt material in amount of at most 70% by weight of the total weight of the porous fibrous layer; and
  (ii) a phenolic thermosetting resin in amount of at most 30% by weight of the total weight of the porous fibrous layer;

- a porous-cellular layer $\beta$ comprising a semirigid, thermoformable polyurethane foam obtainable by a polyol polyether and diphenylmethane diisocyanate, and
- a layer $\gamma$,

wherein the elastic modulus E of said structure is proportional to the value of the following formula (1):

$$\frac{\sum_1^n SW^2}{(t_{max})^2/\lambda} * \frac{\pi^3}{(\alpha_{500\,Hz} * \alpha_{1000\,Hz} * \alpha_{4000\,Hz})}$$

$$(1)$$

wherein

SW is the superficial weight (g/m$^2$) of each layer;
n is the number of layers in structure
$\alpha$ is the sound absorption coefficient, for normal angle wave incidence, at specified frequency
$t_{max}$ is the maximum final thickness of the structure and
$\lambda$ is the total thermal conductivity,
being the elastic modulus E measured according to UNI EN ISO 527.

The multilayer structure of the invention comprises a layer $\alpha 1$ and a layer $\gamma$, that can be equal or different, preferably they are equal. The layer $\alpha 1$ and a layer $\gamma$ are preferably lightweight layer having a superficial weight in the range from 30 to 120 g/m$^2$, more preferably 90 g/m$^2$. They are still more preferably made of polyethylene terephthalate and viscose fibers. They can be non-woven or knitted layers. The layer $\alpha 1$ and the layer $\gamma$ can be also made of carbon fibers, for example oxidized polyacrilonitrile fibers, particularly preferred when high flame and heat resistance are required for the final automotive component.

The multilayer structure of the invention comprises a porous fibrous layer $\alpha 2$ comprising (i) a fibrous felt material selected from the group consisting of a fiber mixture composition of a synthetic fiber and a glass fiber, a fiber mixture composition of a synthetic fiber and a natural fiber; a natural fiber, in amount of at most 70% by weight of the total weight of the porous fibrous layer.

In a first and preferred embodiment of the invention the fibrous felt material comprises a fiber mixture composition of a synthetic fiber and a glass fiber. The fiber mixture composition comprises preferably polyethylene terephthalate as a synthetic fiber, more preferably in amount from 20 to 40%, still more preferably 30-40% by weight of the total weight of the porous fibrous layer and glass fibers in amount from 35% to 50%, by weight of the total weight of the porous fibrous layer. In a more preferred first embodiment the fibrous felt material is a fiber mixture composition of polyethylene terephthalate in amount of 21 % by weight and a glass fiber.

In a second embodiment of the invention the fibrous felt material comprises a fiber mixture composition of a synthetic fiber and a natural fiber. The fiber mixture composition comprises as a synthetic fiber a fiber selected from the group consisting of polyethylene terephthalate, viscose, acrylic fiber and polyamide, preferably in an amount in the range from 5 to 20% by weight of the total weight of the porous fibrous layer. The natural fiber can be the cotton fiber, preferably in an amount in the range from 40 to 60% by weight of the total weight of the porous fibrous layer.

In a third embodiment of the invention the fibrous felt material comprises a natural fiber, preferably cotton.

In all the embodiment of the invention the fibrous felt material (i) is comprised in the porous fibrous layer $\alpha2$ in amount of at most 70% by weight of the total weight of the porous fibrous layer.

The porous fibrous layer $\alpha2$ comprises a phenolic thermosetting resin (ii) in an amount of at most 30% by weight of the total weight of the porous fibrous layer. Preferably the phenolic thermosetting resin is a phenol-formaldehyde polymer. The porous fibrous layer $\alpha2$ can also comprise additives such as flame retardants, like inorganic compounds based on phosphorus.

In a more preferred embodiment of the porous fibrous layer $\alpha2$, this latter comprises the fibrous felt material consisting of a fiber mixture composition of polyethylene terephthalate in amount of 21% by weight and glass fibers in amount of 49% and a phenol-formaldehyde resin with a flame retardant additive in amount of 30%.

The multilayer structure of the invention comprises also a porous-cellular layer $\beta$ comprising a semirigid, thermoformable polyurethane foam obtainable by a polyol polyether and diphenylmethane diisocyanate. This a porous-cellular layer $\beta$ is advantageously with open cell structure, self extinguishing and not burnable.

In a preferred embodiment between the porous fibrous layer $\alpha2$ and a porous-cellular layer $\beta$ a layer of low density polyethylene $\delta$ having a thickness in the range from 0.05 and 1 mm is present, more preferably its thickness is about 0.07 -0.08 mm.

Surprisingly during the research work it has been found that the multilayer structure shows an elastic modulus proportional to the value of the following formula:

$$\frac{\sum_1^n SW^2}{(t_{max})^2/\lambda} * \frac{\pi^3}{(\alpha_{500\,Hz} * \alpha_{1000\,Hz} * \alpha_{4000\,Hz})}$$

$$(1)$$

wherein

SW is the superficial weight (g/m$^2$) of each layer;
n is the number of layers in structure
$\alpha$ is the sound absorption coefficient, for normal angle wave incidence, at specified frequency
$t_{max}$ is the maximum final thickness of the structure and
$\lambda$ is the total thermal conductivity. The value of elastic modulus E was measured according to UNI EN ISO 527.

Optionally, in the layer $\alpha1$, it's also possible to integrate an aesthetic function, using a fabric with a superficial weight in the range from 150 to 350 g/m$^2$, more preferably it comprises polyethylene terephthalate fibers. In an advantageous embodiment the aesthetic porous surface fabric is also colaminated with a light weight polyurethane foam, preferably having a density of about 30 kg/m$^3$.

The features of the above multilayer structure of the inventive allows to achieve the goals of the invention in terms of weight, sound-absorption, mechanical and thermal properties.

In another aspect the invention concerns an automotive component made of the multilayer structure of the invention.

The automotive component of the invention can be selected from the group consisting of a truck/car engine bonnet, a lateral or a central noise absorber, a noise lateral shield, an interior trim lateral panel, a rear wall panel or an interior headliner. The multilayer structure is prepared according to the following process.

In another aspect the invention hence concerns a process for preparing the multilayer structure of the invention, said process comprising the following steps:

(a) dry-curing a multilayer structure comprising

- a layer $\alpha1$
- a porous fibrous layer $\alpha2$ comprising:

  (i) a fibrous felt material selected from the group consisting of a fiber mixture composition of a synthetic fiber and a glass fiber, a fiber mixture composition of a synthetic fiber and a natural fiber; a natural fiber, in amount of at most 70% by weight of the total weight of the porous fibrous layer;
  (ii) a phenolic thermosetting resin in amount of at most 30% by weight of the total weight of the porous fibrous layer

- a porous-cellular layer $\beta$ comprising a semirigid, thermoformable polyurethane foam obtainable by a polyether and diphenylmethane diisocyanate, and
- a layer $\gamma$,
  at a temperature in the range from 150°C to 200°C;

(b) curing with steam at a pressure in the range from 5 to 10 bars
(c) dry curing the multilayer structure of step (b) at a temperature in the range from 150°C to 200°C.

All the above reported preferred aspects of the multilayer structure of the invention are the same also in the process for the preparation of the multilayer structure. The dry curing step (a) or (c) is preferably carried out at a temperature of 190°C; The curing with steam (b) is preferably carried out at a pressure of 8 bar.
Time length of anyone of steps (a)-(c) can affect final properties. Optimal conditions for (a) and (c) are a range from 5 to 20 seconds, while for (b) a range from 60 to 180 seconds. Preferable time lengths for steps (a), (b) and (c) are about 10-90-10 seconds.
The process can be carried out in dedicated hot moulding pinching tools dependently on final component perimeter length.
The invention will be now detailed in the not-limiting experimental part.

**Experimental part.**

Example 1

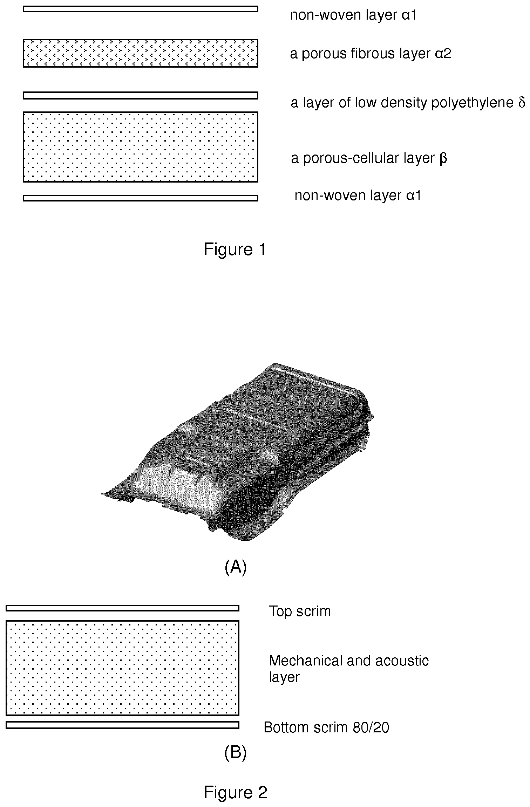

Preparation of a multilayer structure of the invention as represented in figure 1.

In a steel thermoforming tool mounted on a vertical press the multilayer structure of figure 1 was prepared.
On one half of the tool holes of a certain diameter for the steam injection were present and on the other half of the tool other holes for vacuum and gas evacuation were present. The tool was provided with blades for cutting the perimeter of the part and an internal circuit for the thermal oil circulation which allow to heat the mold to the desired temperature.
With reference to Figure 1 the following layers were used:

- non-woven layer $\alpha1$ and a non-woven layer $\gamma$: top and bottom layers were needle punched nonwoven layers having superficial weight of 100 g/m$^2$ and made of a blend 50/50 of polyester fibers and PANox (oxidized poly acrylonitrile) fibers. These layers were requested to fulfill aesthetical requirements and to avoid fiber losses.
- a porous fibrous layer $\alpha2$ having a superficial weight of 900 g/m2 comprising a fibrous felt material made of a fiber mixture composition of polyethylene terephthalate in amount of 21 % by weight and glass fibers in amount of 49% bonded with phenol-formaldehyde resin and a flame retardant additive in amount of 30%.
- a layer of low density polyethylene $\delta$ with thickness is of 0.07 mm
- a porous-cellular layer $\beta$ of 30 mm and comprising a semirigid, thermoformable polyurethane foam obtainable by a polyol polyether and diphenylmethane diisocyanate known on the market with the commercial name of LEVECELL. This foam was made by RIM process and produced in big blocks which were cut into plates of the desired thickness.

All the above layers were cut in correct size to fit in the mold and overlaid in accordance to figure 1.
An operator loaded the layers into the mold and start the production cycle which depended on the amount of material loaded into the mold.

For the above reported material composition the molding cycle parameters were as follows. The temperature of the mold was set between 180°C and 200°C, preferably 190°C, the mold was closed and a pressure between 100 and 400 tons depending on the length of the blades, was applied by a vertical press. After closing the mold and reaching the correct pressure, a time ranging from 5 to 20 seconds, preferably 10 seconds was waited and then the steam was injected into the mold through the appropriate holes, at a pressure between 5 and 10 bar, preferably 8 bar, during a time length of 80 to 150 seconds. After this step the steam was evacuated through the vacuum holes, the pressure inside the mold was reduced to atmospheric pressure. The mold was then open and final multilayer structure was removed from the hot tool manually or by means of automated devices. The final multilayer structure was already in the form of a automotive component, i.e. as a lateral noise shield.

Example 2

Comparison of a truck engine bonnet of the invention with respect to known prior component.

The known prior art truck engine bonnet was an engine sound absorber panel of a Swedish truck currently in production. The truck engine bonnet had the form and comprises the multilayer structure as represented in figure 2(A) e 2 (B), respectively. Specifically the prior art structure comprises the following layers:

- a top scrim having a superficial weight of 50 g/m$^2$ and made of polyester 50%;
- a mechanical and acoustic layer; having a superficial weight of 3600 g/m$^2$ and made of glasswool;
- a bottom scrim having a superficial weight of 100 g/m$^2$ and made of polyester/viscose (80/20).

The known structure and the truck engine bonnet was compared with a truck bonnet made of a multilayer structure of the invention.

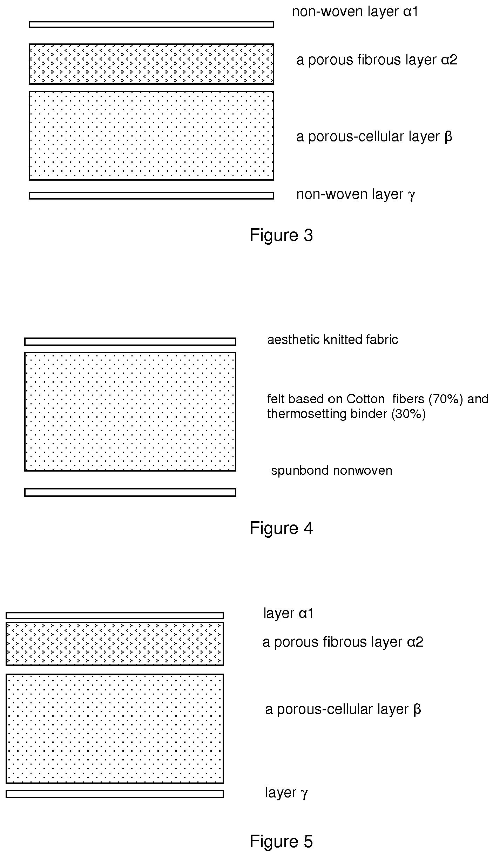

The structure comprises the following layers as also represented in Figure 3:

- non-woven layer $\alpha$1 and a non-woven layer $\gamma$: top and bottom layers were needle punched nonwoven layers having superficial weight of 100 g/m$^2$ and made of a mix 50/50 of polyester fibers and PANox (oxidized poly acrylonitrile) fibers.
- a porous fibrous layer $\alpha$2 having a superficial weight of 900 g/m2 comprising a fibrous felt material made of a fiber mixture composition of polyester and glass fibers in amount higher than 40% bonded with phenol-formaldehyde resin in amount higher than 25%;
- a porous-cellular layer $\beta$ of 30 mm and comprising a semirigid, thermoformable polyurethane foam obtainable by a polyol polyether and diphenylmethane diisocyanate known on the market with the commercial name of LEVECELL.

The truck engine bonnet according of the invention was prepared by subjecting the structure above indicated and represented in Figure 3 to the process as stated in example 1.

The two bonnets (invention and comparative sample) were compared for acoustic (UNI EN ISO 11654), mechanical (UNI EN ISO 527), handling and thermal properties (UNI EN ISO 8301 and DIN 673)

The following results were obtained.

|  | Acoustic test | Mechanical test | Handling test | Thermal test |
|---|---|---|---|---|
| Comparative sample (figure 2) | Ref | Ref | Ref. | Ref |
| Sample of the invention (figure 3) | = | = | ++ | + |

The sample of the invention, i.e the truck engine bonnet made of the multilayer structure of figure 3, showed identical acoustic and mechanical properties to the known truck engine bonnet of figure 2 , and showed a better handling and thermal properties with respect to it.

Furthermore the weight of the samples were compared and the results are reported below:

Sample of prior art (Figure 2): 14kg
Sample of the invention (Figure 3): 6Kg

From the above reported values, the weight reduction achieved with the novel multilayer structure was around 60% with respect to the comparative sample.

It is evident that the multilayer structure of the invention allows to prepare automotive components which showed not only better performance in terms of handling and thermal properties, while maintaining the same acoustic and mechanical properties, but also they weigh less than the prior art automotive components.

Example 3

Comparison of an interior trim panel of the invention with respect to known prior component for thermal properties

An interim trim panel of the prior art having the structure reported in figure 4 was compared with a multilayer structure of the invention as represented in figure 5. Specifically the comparative prior art panel was made of the following structure:

- an aesthetic knitted fabric of polyethylene terephthalate having a superficial weight of 200 g/m2;
- a felt based on cotton fibers (70%) and thermosetting binder (30%) having a superficial weight of 2200 g/m2; and
- PET spunbond nonwoven layer having superficial weight of 30 g/m$^2$

The multilayer structure of the invention used for this comparison was the following:

- layer $\alpha 1$: aesthetic knitted fabric of polyethylene terephthalate having a superficial weight of 200 g/m2;
- a porous fibrous layer $\alpha 2$ having a superficial weight of 1000 g/m2 comprising a fibrous felt material made of cotton fibers (70%) and thermosetting binder (30%)
- a porous-cellular layer $\beta$ of 30 mm and comprising a semirigid, thermoformable polyurethane foam obtainable by a polyol polyether and diphenylmethane diisocyanate known on the market with the commercial name of LEVECELL
- a layer $\gamma$: polyethylene terephthalate spunbond nonwoven layer having a superficial weight of 30 g/m$^2$.

The interior trim panel according of the invention was prepared by subjecting the structure above indicated and represented in Figure 5 to the process as stated in example 1.

The two interior trim panels were compared for thermal insulation properties measured according to ISO 8301 and DIN EN 673.

The following results were obtained:

| Structure description | Thermal transmittance U (W/m$^2$K) |
|---|---|
| Sample of the prior art as reported in figure 4 | 1.361 |
| Sample of the invention as reported in figure 5 | 0.929 |

In the above table, the thermal transmittance U values for the two interior trim panels (invention and comparative samples), according to DIN 673, are reported. The sample of the invention, showed lower thermal transmittance with respect of the sample of the prior art.

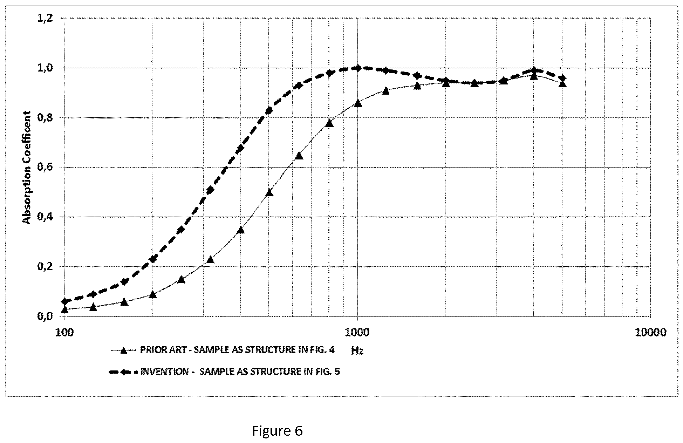

The two interior trim panels (invention and comparative samples) were compared also for acoustic, the results according to UNI EN ISO 10534, are reported in Figure 6. The sample of the invention showed higher absorption coefficient with respect to the sample of the prior art.

Furthermore the weight of the samples were compared and the results are reported below:

Sample of prior art (Figure 4): 2.4kg
Sample of the invention (Figure 5): 1.6Kg

The following results were obtained.

| | Acoustic test | Mechanical test | Handling test | Thermal test |
|---|---|---|---|---|
| Comparative sample (figure 4) | Ref | Ref | Ref. | Ref |
| Sample of the invention (figure 5) | + | = | ++ | ++ |

The sample of the invention, i.e. the interior trim panel made of the multilayer structure of figure 5, showed better acoustic and equal mechanical properties (UNI EN ISO 527), to the known panel of figure 4, and showed a better handling and thermal properties with respect to it.

Example 4: Evaluation of the Young modulus E of the structures of the invention of figure 1 with respect to the known structure of figures 2 and 4.

The lateral noise shield of example 1 having the structure of figure 1 was compared with

- the prior art truck engine bonnet of example 2 and having the structure of Figure 2; and
- the prior art interior trim panel of example 3 and having the structure of figure 4. The Young modulus E was evaluated according to formula (1)

$$\frac{\sum_1^4 SW^2}{(t_{max})^2/\lambda} * \frac{\pi^3}{(\alpha_{500\,Hz} * \alpha_{1000\,Hz} * \alpha_{4000\,Hz})}$$

and was also measured according to ISO 527 method.

The results are reported in the following table:

| Sample | Superficial weight (Kg/m$^2$) | Young Modulus E ISO 527 (MPa) | Young Modulus E According to Formula (1) (MPa) | Delta modulus E | Delta Modulus E % |
|---|---|---|---|---|---|
| truck engine bonnet (figure 2) | 3.6 | 1.120 | 4.277 | 3.157 | 73.81 |
| lateral noise shield ( figure 1) | 1.6 | 920 | 899 | -21 | -2.34 |
| interior trim panel (figure 4) | 2.0 | 1000 | 707638 | 706638 | 99.86 |

The automotive component of the invention showed a very low weight and a good mechanical rigidity and better acoustic and thermal performances. Furthermore the Young Modulus E of the inventive component as measured with ISO 527 was coherent with the value of Young modulus E calculated with the formula (1), this was not valid for all tested structures produced according to prior art. Therefore a structure, having a Young Modulus E according to Formula (1) similar to that one measured according to ISO 527, is light, structurally rigid and with acoustic and thermal properties better than structure of the prior art.

**Claims**

1. A multilayer structure comprising:

    - a layer $\alpha 1$;
    - a porous fibrous layer $\alpha 2$ comprising:

        (i) a fibrous felt material selected from the group consisting of a fiber mixture composition of a synthetic fiber and a glass fiber, a fiber mixture composition of a synthetic fiber and a natural fiber; a natural fiber, being said fibrous felt material in amount of at most 70% by weight of the total weight of the porous fibrous layer; and
        (ii) a phenolic thermosetting resin in amount of at most 30% by weight of the total weight of the porous fibrous layer;

    - a porous-cellular layer $\beta$ comprising a semirigid, thermoformable polyurethane foam obtainable by a polyether and diphenylmethane diisocyanate; and
- a layer $\gamma$,
wherein the elastic modulus E according to UNI EN ISO 527 of said structure is proportional to the value of the following formula (1):

$$\frac{\sum_1^n SW^2}{(t_{max})^2 \big/ \lambda} * \frac{\pi^3}{(\alpha_{500\,Hz} * \alpha_{1000\,Hz} * \alpha_{4000\,Hz})}$$

$$(1)$$

wherein

SW is the superficial weight (g/m$^2$) of each layer;
n is the number of layers in structure;
$\alpha$ is the sound absorption coefficient, for normal angle wave incidence, at specified frequency according to UNI EN ISO 10534;
t$max$ is the maximum final thickness of the structure; and
$\lambda$ is the total thermal conductivity according to UNI EN ISO 8301,
being the elastic modulus E measured according to UNI EN ISO 527.

2. The multilayer structure according to claim 1, wherein the layer $\alpha 1$ and a layer $\gamma$, are, independently each other, a lightweight layer having a superficial weight in the range from 30 to 120 g/m$^2$, preferably 90 g/m$^2$.

3. The multilayer structure according to claim 2, wherein the layer $\alpha 1$ and a layer $\gamma$, are selected from the group consisting of polyethylene terephthalate and viscose fibers, carbon fibers, oxidized polyacrilonitrile fibers.

4. The multilayer structure according to anyone of claims 1-3, wherein the porous fibrous layer $\alpha 2$ comprises a fibrous felt material comprising a fiber mixture composition of a synthetic fiber and a glass fiber.

5. The multilayer structure according to claim 4, wherein the fiber mixture composition comprises polyethylene terephthalate as a synthetic fiber, preferably in amount from 20 to 40% by weight of the total weight of the porous fibrous layer and glass fibers in amount from 35% to 50%, by weight of the total weight of the porous fibrous layer.

6. The multilayer structure according to anyone of claims 1-3, wherein the porous fibrous layer $\alpha 2$ comprises a fibrous felt material comprising a fiber mixture composition of a synthetic fiber and a natural fiber.

7. The multilayer structure according to claim 6, wherein the fiber mixture composition comprises, as a synthetic fiber, a fiber selected from the group consisting of polyethylene terephthalate, viscose, acrylic fiber and polyamide, preferably in an amount in the range from 5 to 20% by weight of the total weight of the porous fibrous layer.

8. The multilayer structure according to claim 6 or claim 7, wherein the natural fiber is a cotton fiber, preferably in an amount in the range from 40 to 60% by weight of the total weight of the porous fibrous layer.

9. The multilayer structure according to anyone of claims 1-3, wherein the porous fibrous layer $\alpha 2$ comprises a fibrous felt material comprising a cotton fiber.

10. The multilayer structure according to claim 1, wherein the phenolic thermosetting resin is a phenol-formaldehyde polymer.

11. The multilayer structure of claim 1, wherein the porous fibrous layer $\alpha 2$, comprises the fibrous felt material consisting of a fiber mixture composition of polyethylene terephthalate in amount of 21% by weight and glass fibers in amount of 49% and a phenol-formaldehyde resin with a flame retardant additive in amount of 30%.

12. The multilayer structure according to anyone of claims 1-11, wherein between the porous fibrous layer $\alpha 2$ and a porous-cellular layer $\beta$ a layer of low density polyethylene $\delta$ having a thickness in the range from 0.05 and 1 mm is present.

**13.** An automotive component made of the multilayer structure according to anyone of claims 1-12.

**14.** The automotive component according to claim 13, wherein said automotive component is selected from the group consisting of a truck/car engine bonnet, a lateral or a central noise absorber, a noise lateral shield, an interior trim lateral panel, a rear wall panel or an interior headliner.

**15.** A process for preparing the multilayer structure according to anyone of claims 1-12, said process comprising the following steps:

(a) dry-curing a multilayer structure comprising

- a layer $\alpha 1$
- a porous fibrous layer $\alpha 2$ comprising:

(i) a fibrous felt material selected from the group consisting of a fiber mixture composition of a synthetic fiber and a glass fiber, a fiber mixture composition of a synthetic fiber and a natural fiber; a natural fiber, in amount of at most 70% by weight of the total weight of the porous fibrous layer;
(ii) a phenolic thermosetting resin in amount of at most 30% by weight of the total weight of the porous fibrous layer

- a porous-cellular layer $\beta$ comprising a semirigid, thermoformable polyurethane foam obtainable by a polyether and diphenylmethane diisocyanate, and
- a layer $\gamma$,
at a temperature in the range from 150°C to 200°C;

(b) curing with steam at a pressure in the range from 5 to 10 bars
(c) dry curing the multilayer structure of step (b) at a temperature in the range from 150°C to 200°C.

**Patentansprüche**

**1.** Mehrschichtige Struktur, welche umfasst:

- eine Schicht $\alpha 1$;
- eine poröse, faserige Schicht $\alpha 2$, welche umfasst:

(i) ein faseriges Filzmaterial, welches ausgewählt ist aus der Gruppe bestehend aus einer Fasermischungszusammensetzung einer synthetischen Faser und einer Glasfaser, einer Fasermischungszusammensetzung einer synthetischen Faser und einer natürlichen Faser; einer natürlichen Faser, welches das faserige Filzmaterial in einer Menge von höchstens 70 Gewichts-% des Gesamtgewichts der porösen faserigen Schicht ist; und
(ii) ein wärmehärtendes Phenolharz in einer Menge von höchstens 30 Gewichts-% des Gesamtgewichts der porösen faserigen Schicht;

- eine porös-zelluläre Schicht $\beta$, welche einen halbharten, warmformbaren Polyurethanschaum umfasst, der mit einem Polyether und Diphenylmethandiisocyanat erhältlich ist; und
- eine Schicht $\gamma$,
wobei der Elastizitätsmodul E gemäß UNI EN ISO 527 der Struktur proportional zu dem Wert der folgenden Formel (1) ist:

$$\frac{\sum_1^n SW^2}{(t_{max})^2/\lambda} * \frac{\pi^3}{(\alpha_{500\,Hz} * \alpha_{1000\,Hz} * \alpha_{4000\,Hz})} \tag{1}$$

wobei

SW das Oberflächengewicht (g/m$^2$) jeder Schicht ist;

n die Anzahl der Schichten in der Struktur ist;

$\alpha$ der Schallabsorptionskoeffizient, für rechtwinkliges Auftreffen der Wellen, bei einer spezifizierten Frequenz gemäß UNI EN ISO 10534 ist;

t*max* die maximale endgültige Dicke der Struktur ist; und

$\lambda$ die Gesamtwärmeleitfähigkeit gemäß UNI EN ISO 8301 ist,

wobei der Elastizitätsmodul E gemäß UNI EN ISO 527 gemessen ist.

2. Mehrschichtige Struktur nach Anspruch 1, wobei die Schicht $\alpha$1 und eine Schicht $\gamma$ unabhängig voneinander eine leichtgewichtige Schicht mit einem Oberflächengewicht im Bereich von 30 bis 120 g/m$^2$, bevorzugt 90 g/m$^2$, sind.

3. Mehrschichtige Struktur nach Anspruch 2, wobei die Schicht $\alpha$1 und eine Schicht $\gamma$ ausgewählt sind aus der Gruppe bestehend aus Polyethylenterephthalat und Viskosefasern, Kohlenstofffasern, oxidierten Polyacrylnitrilfasern.

4. Mehrschichtige Struktur nach einem der Ansprüche 1 bis 3, wobei die poröse faserige Schicht $\alpha$2 ein faseriges Filzmaterial umfasst, welches eine Fasermischungszusammensetzung einer synthetischen Faser und einer Glasfaser umfasst.

5. Mehrschichtige Struktur nach Anspruch 4, wobei die Fasermischungszusammensetzung Polyethylenterephthalat als synthetische Faser, bevorzugt in einer Menge von 20 bis 40 Gewichts-% des Gesamtgewichts der porösen faserigen Schicht, und Glasfasern in einer Menge von 35 bis 50 Gewichts-% des Gesamtgewichts der porösen faserigen Schicht umfasst.

6. Mehrschichtige Struktur nach einem der Ansprüche 1 bis 3, wobei die poröse faserige Schicht $\alpha$2 ein faseriges Filzmaterial umfasst, welches eine Fasermischungszusammensetzung einer synthetischen Faser und einer natürlichen Faser umfasst.

7. Mehrschichtige Struktur nach Anspruch 6, wobei die Fasermischungszusammensetzung als synthetische Faser eine Faser umfasst, welche ausgewählt ist aus der Gruppe bestehend aus Polyethylenterephthalat, Viskose, Acrylfaser und Polyamid, bevorzugt in einer Menge im Bereich von 5 bis 20 Gewichts-% des Gesamtgewichts der porösen faserigen Schicht.

8. Mehrschichtige Struktur nach Anspruch 6 oder 7, wobei die natürliche Faser eine Baumwollfaser ist, bevorzugt in einer Menge im Bereich von 40 bis 60 Gewichts-% des Gesamtgewichts der porösen faserigen Schicht.

9. Mehrschichtige Struktur nach einem der Ansprüche 1 bis 3, wobei die poröse faserige Schicht $\alpha$2 eine faseriges Filzmaterial umfasst, welches eine Baumwollfaser umfasst.

10. Mehrschichtige Struktur nach Anspruch 1, wobei das wärmehärtende Phenolharz ein Phenol-Formaldehyd-Polymer ist.

11. Mehrschichtige Struktur nach Anspruch 1, wobei die poröse faserige Schicht $\alpha$2 das faserige Filzmaterial umfasst, welches aus einer Fasermischungszusammensetzung von Polyethylenterephthalat in einer Menge von 21 Gewichts-% und Glasfasern in einer Menge von 49% und einem Phenol-Formaldehyd-Harz mit einem flammhemmenden Additiv in einer Menge von 30% besteht.

12. Mehrschichtige Struktur nach einem der Ansprüche 1 bis 11, wobei zwischen der porösen faserigen Schicht $\alpha$2 und einer porös-zellulären Schicht $\beta$ eine Schicht aus Polyethylen niedriger Dichte $\delta$ vorhanden ist, welche eine Dicke im Bereich von 0,05 und 1 mm aufweist.

13. Automobilkomponente, welche hergestellt ist aus der mehrschichtigen Struktur nach einem der Ansprüche 1 bis 12.

14. Automobilkomponente nach Anspruch 13, wobei die Automobilkomponente ausgewählt ist aus der Gruppe bestehend aus einer Lastwagen/Auto-Motorhaube, einem seitlichen oder mittigen Geräuschabsorber, einer seitlichen Geräuschabschirmung, einer Innenverkleidungs-Seitenplatte, einer Rückwandplatte oder einem Innenraum-Dachhimmel.

15. Verfahren zur Herstellung der mehrschichtigen Struktur nach einem der Ansprüche 1 bis 12, wobei das Verfahren die folgenden Schritte umfasst:

(a) Trockenhärten einer mehrschichtigen Struktur, welche umfasst:

- eine Schicht $\alpha 1$,
- eine poröse faserige Schicht $\alpha 2$, welche umfasst:

(i) ein faseriges Filzmaterial, welches ausgewählt ist aus der Gruppe bestehend aus einer Fasermischungszusammensetzung einer synthetischen Faser und einer Glasfaser, einer Fasermischungszusammensetzung einer synthetischen Faser und einer natürlichen Faser; einer natürlichen Faser, in einer Menge von höchstens 70 Gewichts-% des Gesamtgewichts der porösen faserigen Schicht;
(ii) ein wärmehärtendes Phenolharz in einer Menge von höchstens 30 Gewichts-% des Gesamtgewichts der porösen faserigen Schicht,

- eine porös-zelluläre Schicht $\beta$, welche einen halbharten, warmformbaren Polyurethanschaum umfasst, der mit einem Polyether und Diphenylmethandiisocyanat erhältlich ist, und
- eine Schicht $\gamma$,
bei einer Temperatur im Bereich von 150 °C bis 200 °C;

(b) Härten mit Wasserdampf bei einem Druck im Bereich von 5 bis 10 bar,
(c) Trockenhärten der mehrschichtigen Struktur aus Schritt (b) bei einer Temperatur im Bereich von 150 °C bis 200 °C.

## Revendications

1. Structure multicouche comprenant :

- une couche $\alpha 1$ ;
- une couche de fibres poreuses $\alpha 2$ comprenant :

(i) un matériau de feutre fibreux sélectionné parmi le groupe constitué d'une composition de mélange fibreux d'une fibre synthétique et d'une fibre de verre, d'une composition de mélange fibreux d'une fibre synthétique et d'une fibre naturelle ; une fibre naturelle, ledit matériau de feutre fibreux étant en quantité d'au moins 70 % en poids du poids total de la couche de fibres poreuses ; et
(ii) une résine phénolique thermodurcissable en quantité d'au moins 30 % en poids du poids total de la couche de fibres poreuses ;

- une couche cellulaire poreuse $\beta$ comprenant une mousse de polyuréthane semi-rigide thermoformable pouvant être obtenue au moyen d'un polyéther et diphénylméthane diisocyanate ; et
- une couche $\gamma$,
dans lequel le module d'élasticité E conformément à l'UNI EN ISO 527 de ladite structure est proportionnel à la valeur de la formule suivante (1) :

$$\frac{\sum_1^n SW^2}{(t_{max})^2/\lambda} * \frac{\pi^3}{(\alpha_{500\,Hz} * \alpha_{1000\,Hz} * \alpha_{4000\,Hz})}$$

$$(1)$$

où

SW est le poids superficiel (g/m$^2$) de chaque couche ;
n est le nombre de couches dans la structure ;
$\alpha$ est le coefficient d'absorption acoustique, pour une incidence d'ondes à angle normal, à une fréquence spécifiée conformément à l'UNI EN ISO 10534;
$t_{max}$ est l'épaisseur finale maximale de la structure ; et

À est la conductivité thermique totale conformément à l'UNI EN ISO 8301,
le module d'élasticité E étant mesuré conformément à l'UNI EN ISO 527.

**2.** Structure multicouche selon la revendication 1, dans laquelle la couche $\alpha$1 et une couche $\gamma$ sont, indépendamment l'une de l'autre, une couche légère ayant un poids superficiel compris dans la plage allant de 30 à 120 g/m$^2$, de préférence égal à 90 g/m$^2$.

**3.** Structure multicouche selon la revendication 2, dans laquelle la couche $\alpha$1 et une couche $\gamma$ sont sélectionnées parmi le groupe constitué de fibres de polyéthylène téréphtalate et de viscose, de fibres de carbone, de fibres de polyacrylonitrile oxydé.

**4.** Structure multicouche selon l'une quelconque des revendications 1 à 3, dans laquelle la couche de fibres poreuses $\alpha$2 comprend un matériau de feutre fibreux comprenant une composition de mélange de fibres d'une fibre synthétique et d'une fibre de verre.

**5.** Structure multicouche selon la revendication 4, dans laquelle la composition de mélange de fibres comprend du polyéthylène téréphtalate comme fibre synthétique, de préférence en quantité de 20 % à 40 % en poids du poids total de la couche de fibres poreuses et des fibres de verre en quantité de 35 % à 50 % en poids du poids total de la couche de fibres poreuses.

**6.** Structure multicouche selon l'une quelconque des revendications 1 à 3, dans laquelle la couche de fibres poreuses $\alpha$2 comprend un matériau de feutre fibreux comprenant une composition de mélange de fibres d'une fibre synthétique et d'une fibre naturelle.

**7.** Structure multicouche selon la revendication 6, dans laquelle la composition de mélange de fibres comprend, comme fibre synthétique, une fibre sélectionnée parmi le groupe constitué de fibres de polyéthylène téréphtalate, de viscose, d'acrylique et de polyamide, de préférence en quantité de 5 % à 20 % en poids du poids total de la couche de fibres poreuses.

**8.** Structure multicouche selon la revendication 6 ou la revendication 7, dans laquelle la fibre naturelle est une fibre de coton, de préférence en quantité comprise entre 40 % et 60 % en poids du poids total de la couche de fibres poreuses.

**9.** Structure multicouche selon l'une quelconque des revendications 1 à 3, dans laquelle la couche de fibres poreuses $\alpha$2 comprend un matériau de feutre fibreux comprenant une fibre de coton.

**10.** Structure multicouche selon la revendication 1, dans laquelle la résine phénolique thermodurcissable est un polymère phénol-formaldéhyde.

**11.** Structure multicouche selon la revendication 1, dans laquelle la couche de fibres poreuses $\alpha$2 comprend le matériau de feutre fibreux constitué d'une composition de mélange de fibres de polyéthylène téréphtalate en quantité de 21 % en poids et de fibres de verre en quantité de 49 % et d'une résine phénol-formaldéhyde contenant un additif ignifuge en quantité de 30 %.

**12.** Structure multicouche selon l'une quelconque des revendications 1 à 11, dans laquelle entre la couche de fibres poreuses $\alpha$2 et une couche cellulaire poreuse $\beta$ est présente une couche de polyéthylène à faible densité $\delta$ présentant une épaisseur comprise entre 0,05 et 1 mm.

**13.** Composant automobile constitué de la structure multicouche selon l'une quelconque des revendications 1 à 12.

**14.** Composant automobile selon la revendication 13, dans lequel ledit composant automobile est sélectionné parmi le groupe constitué d'un capot de moteur de camion/voiture, d'un dispositif d'absorption du bruit latéral ou central, d'une plaque d'insonorisation latérale, d'un panneau latéral de garniture intérieure, d'un panneau mural arrière ou d'une garniture de toit intérieure.

**15.** Procédé de préparation de la structure multicouche selon l'une quelconque des revendications 1 à 12, ledit procédé comprenant les étapes suivantes :

(a) la cuisson à sec d'une structure multicouche comprenant

- une couche $\alpha1$ ;
- une couche de fibres poreuses $\alpha2$ comprenant :

(i) un matériau de feutre fibreux sélectionné parmi le groupe constitué d'une composition de mélange fibreux d'une fibre synthétique et d'une fibre de verre, d'une composition de mélange fibreux d'une fibre synthétique et d'une fibre naturelle ; une fibre naturelle, ledit matériau de feutre fibreux étant en quantité d'au moins 70 % en poids du poids total de la couche de fibres poreuses ; et
(ii) une résine phénolique thermodurcissable en quantité d'au moins 30 % en poids du poids total de la couche de fibres poreuses ;

- une couche cellulaire poreuse $\beta$ comprenant une mousse de polyuréthane semi-rigide thermoformable pouvant être obtenue au moyen d'un polyéther et diisocyanate de diphénylméthane ; et
- une couche $\gamma$,
à une température comprise entre 150°C et 200°C ;

(b) l'étuvage à une température comprise entre 5 et 10 bar ;
(c) la cuisson à sec de la structure multicouche de l'étape (b) à une température comprise entre 150°C et 200°C.

non-woven layer α1

a porous fibrous layer α2

a layer of low density polyethylene δ

a porous-cellular layer β

non-woven layer α1

Figure 1

(A)

Top scrim

Mechanical and acoustic
layer

Bottom scrim 80/20

(B)

Figure 2

non-woven layer α1

a porous fibrous layer α2

a porous-cellular layer β

non-woven layer γ

Figure 3

aesthetic knitted fabric

felt based on Cotton fibers (70%) and thermosetting binder (30%)

spunbond nonwoven

Figure 4

layer α1

a porous fibrous layer α2

a porous-cellular layer β

layer γ

Figure 5

Figure 6

**REFERENCES CITED IN THE DESCRIPTION**

**Patent documents cited in the description**

- WO 2016166217 A
- EP 2251858 A